# EUROPÄISCHE PATENTSCHRIFT

(11) **EP 2 537 065 B1**
(45) Veröffentlichungstag und Bekanntmachung des Hinweises auf die Patenterteilung: **25.03.2015**
(21) Anmeldenummer: 11708215.6
(22) Anmeldetag: 17.02.2011
(51) Int. Cl.: G02F 1/155

(54) **ELEKTROCHROME VERGLASUNG MIT SERIELL VERSCHALTETEN ZELLEN, SOWIE HERSTELLUNGSVERFAHREN HIERFÜR**
ELECTROCHROMIC GLAZING WITH CELLS CONNECTED IN SERIES AND METHOD FOR PRODUCING SAME
VITRAGE ÉLECTROCHROME DOTÉ DE CELLULES CONNECTÉES EN SÉRIE, AINSI QUE SON PROCÉDÉ DE FABRICATION

(30) Priorität: 19.02.2010 EP 10001711
(43) Veröffentlichungstag der Anmeldung: 26.12.2012
(73) Patentinhaber: Saint-Gobain Glass France, 92400 Courbevoie (FR)
(72) Erfinder: YEH, Li-Ya, 52511 Geilenkirchen (DE); LETOCART, Philippe, B-4730 Raeren (BE); ROYER, Bastien, 53424 Remagen (DE); HUHN, Norbert, 52134 Herzogenrath (DE)
(74) Vertreter: Gebauer, Dieter Edmund
(86) Internationale Anmeldenummer: PCT/EP2011/052381
(87) Internationale Veröffentlichungsnummer: WO 2011/101427

(56) Entgegenhaltungen:
- EP-A1- 1 394 598
- EP-A2- 1 396 676
- EP-B1- 0 338 876
- FR-A1- 2 781 084
- JP-A- 61 249 026
- JP-A- H01 142 620
- US-A1- 2003 053 188

## Beschreibung

Die Erfindung liegt auf dem technischen Gebiet der optisch aktiven Bauelemente und betrifft eine elektrochrome Verglasung, sowie ein Herstellungsverfahren hierfür.

Elektrochrome Verglasungen, bei denen die optische Transmission durch Zuführen von elektrischer Leistung verändert werden kann, sind als solche wohlbekannt und bereits vielfach in der Patentliteratur beschrieben worden. Lediglich beispielhaft sei diesbezüglich auf die europäischen Patente EP 0338876, EP 0408427, EP 0628849, EP 1859319 B1 und das US-Patent 5,985,486 verwiesen.

Allgemein umfassen elektrochrome Verglasungen zumindest ein transparentes Substrat, auf dem eine mehrere funktionelle Schichten umfassende Schichtenfolge aufgebracht ist. Diese umfasst in der Regel zwei Elektrodenschichten und zwei zwischen den beiden Elektrodenschichten befindliche, elektrochemisch aktive Schichten, die durch eine Elektrolytschicht voneinander getrennt sind. Die beiden aktiven Schichten sind jeweils in der Lage, kleine Ionen (z. B. H⁺, Li⁺) reversibel einzulagern, wobei zumindest eine der beiden Schichten aus einem elektrochromen Material besteht, das über verschiedene Oxidationszustände verfügt, die dem ein- bzw. ausgelagerten Zustand der Ionen entsprechen und eine unterschiedliche Färbung haben. Durch Anlegen von elektrischen Spannungen verschiedener Polarität kann die Ein- bzw. Auslagerung der Ionen gesteuert werden, um dadurch gezielt Einfluss auf die optische Transmission zu nehmen. Elektrochrome Verglasungen werden insbesondere in Gebäuden und Fahrzeugen eingesetzt, um die Menge einfallenden Lichts stufenlos zu regeln.

Wie sich in der praktischen Anwendung gezeigt hat, nehmen die zum Ändern der optischen Transmission erforderlichen Schaltzeiten elektrochromer Verglasungen mit einer Vergrößerung der Verglasungsfläche stark zu. Dies kann in unerwünschter Weise zur Folge haben, dass der Wirkungsgrad elektrochromer Verglasungen, die beispielsweise zur Regelung des Raumklimas eingesetzt werden, vermindert ist. Darüber hinaus kann dem Nutzer an einer schnellen Änderung der optischen Transmission der Verglasung gelegen sein, beispielsweise um über einen effektiven Blendschutz für Sonnenlicht bei wechselnden Lichtverhältnissen zu verfügen.

Dem Fachmann ist bekannt, dass eine wesentliche Ursache der flächenabhängigen Schaltzeitzunahme elektrochromer Verglasungen in einer nur begrenzten elektrischen Leitfähigkeit der transparenten Elektrodenschichten liegt. Abhängig von der Zusammensetzung der Elektrodenschicht und deren Schichtdicke liegt der elektrische Flächenwiderstand transparenter Elektrodenschichten typischer Weise im Bereich von ca. 5 Ohm bis 80 Ohm.

Aus der internationalen Patentanmeldung WO 00/57243 A1 geht hervor, eine Elektrodenschicht aus einem transparenten Metalloxid mit einem Netz aus einer leitfähigen Paste zu überziehen, um die Leitfähigkeit der Elektrodenschicht zu erhöhen. Die dort gezeigte Maßnahme ist technisch relativ aufwändig und erfordert zusätzliche Verfahrensschritte, insbesondere zum Erzeugen hoher Prozesstemperaturen zum Austrocknen der leitfähigen Paste.

Dem japanischen Patent Abstract JP 61 249026 A kann eine elektrochrome Anzeigevorrichtung entnommen werden, bei dem die Gräben des Schichtenaufbaus zur Unterteilung in Zellen ineinander geschachtelt sind.

Dem japanischen Patent Abstract JP 01143620 A kann eine elektrochrome Anzeigevorrichtung entnommen werden, bei dem Lücken zwischen der unteren Elektrode durch ein von den funktionellen Schichten verschiedenes, isolierendes Füllmaterial verfüllt sind.

Demgegenüber besteht die Aufgabe der vorliegenden Erfindung darin, eine alternative Möglichkeit zur Verfügung zu stellen, durch die eine Verminderung der Schaltzeiten elektrochromer Verglasungen erreicht werden kann.

Diese und weitere Aufgaben werden nach dem Vorschlag der Erfindung durch eine elektrochrome Verglasung mit den Merkmalen des unabhängigen Patentanspruchs gelöst. Vorteilhafte Ausgestaltungen der Erfindung sind durch die Merkmale der Unteransprüche angegeben.

Die elektrochrome Verglasung umfasst nach ihrer Gattung zumindest ein Substrat aus einem transparenten Material und einen auf das Substrat aufgebrachten Schichtenaufbau, der sich aus einer Mehrzahl funktioneller Schichten zusammensetzt. Es versteht sich, dass die Verglasung nicht zwangsläufig ein oder mehrere gläserne Substrate enthalten muss, sondern dass diese auch aus einem nichtgläsernen Material, beispielsweise Kunststoff, bestehen können.

Der Schichtenaufbau der elektrochromen Verglasung umfasst zwei Elektrodenschichten, welche im Weiteren als erste und zweite Elektrodenschicht bezeichnet werden, die jeweils aus einem Material mit einer hohen Elektronenleitfähigkeit bestehen. Zwischen den beiden Elektrodenschichten befinden sich zwei elektrochemisch aktive Schichten, welche im Weiteren als erste und zweite aktive Schicht bezeichnet werden, die zum reversiblen Einlagern von Ionen geeignet sind. Dabei besteht die erste aktive Schicht aus einem elektrochromen Material und dient durch die Möglichkeit einer elektrisch gesteuerten Änderung seiner optischen Transmission (Transparenz) als farbgebende Schicht, während die zweite aktive Schicht als Ionenspeicherschicht bzw. Gegenelektrode dient. Die beiden aktiven Schichten sind durch eine Elektrolytschicht voneinander getrennt, welche aus einem Material besteht, das eine sehr niedrige bzw. verschwindend geringe Elektronenleitfähigkeit, jedoch eine hohe Ionenleitfähigkeit zumindest für die Ionen hat, die in die beiden aktiven Schichten reversibel eingelagert werden können. Für die erste aktive Schicht kann als elektrochromes Material ein kathodisch oder anodisch elektrochromes Material verwendet werden, welche sich insbesondere darin unterscheiden, dass ihre optische Transmission durch Verbinden mit dem Kathodenanschluss im Falle des kathodisch elektrochromen Materials beziehungsweise mit dem Anodenanschluss im Falle des anodisch elektrochromen Materials verändert werden kann. Die Ionenspeicherschicht bzw. Gegenelektrode kann aus einem Material bestehen, dass seine optische Transmission beim reversiblen Einlagern der Ionen entweder nicht ändert, oder aber so ändert, dass die Färbung der ersten aktiven Schicht verstärkt wird. Im letztgenannten Fall kann die Ionenspeicherschicht beispielsweise aus einem anodisch elektrochromen Material bestehen, wenn die erste aktive Schicht aus einem kathodisch elektrochromen Material besteht bzw. aus einem kathodisch elektrochromen Material, wenn die erste aktive Schicht aus einem anodisch elektrochromen Material besteht.

Die erfindungsgemäße elektrochrome Verglasung zeichnet sich in wesentlicher Weise dadurch aus, dass der Schichtenaufbau durch eine oder mehrere Übergangszonen in seriell miteinander verschaltete elektrochrome Zellen unterteilt ist. Die elektrochrome Verglasung kann als Serienverschaltung von Kapazitäten (Zellen) aufgefasst werden. Als "Übergangszone" wird hier und im Weiteren eine Zone des Schichtenaufbaus verstanden, die mit einer aus drei Gräben bestehenden Grabenstruktur versehen ist. So umfasst jede Übergangszone einen ersten Graben, durch den die erste Elektrodenschicht in voneinander elektrisch isolierte erste Elektrodenabschnitte unterteilt ist, einen zweiten Graben, durch den die zweite Elektrodenschicht in voneinander elektrisch isolierte zweite Elektrodenabschnitte unterteilt ist, sowie einen mit einem elektrisch leitenden Material verfüllten dritten Graben, durch den der erste Elektrodenabschnitt und der zweite Elektrodenabschnitt der beiden Zellen, welche an die Übergangszone angrenzen, elektrisch miteinander verbunden sind. In der Grabenstruktur ist der dritte Graben zwischen dem ersten und zweiten Graben angeordnet. Für eine serielle Verschaltung der Zellen bleibt eine bestimmte Reihenfolge der Gräben in den Übergangszonen jeweils erhalten, wobei sich der erste Graben stets auf der einen Seite des dritten Grabens und der zweite Graben stets auf der anderen Seite des dritten Grabens befinden.

Die erfindungsgemäße elektrochrome Verglasung weist somit eine Aufteilung des Schichtenaufbaus in eine Mehrzahl elektrochromer Zellen auf, wodurch besonders schnelle Schaltzeiten ermöglicht sind, die schneller sein können als in herkömmlichen elektrochromen Verglasungen vergleichbarer Größe. Durch eine monolithisch integrierte Serienverschaltung der Zellen kann die erfindungsgemäße Verglasung in der industriellen Serienfertigung durch Einsatz herkömmliche Methoden kostengünstig und einfach realisiert werden.

Bei einer vorteilhaften Ausgestaltung der erfindungsgemäßen elektrochromen Verglasung ist die zweite Elektrodenschicht oberhalb der ersten Elektrodenschicht angeordnet, wobei der dritte Graben einer jeden Übergangszone durch das elektrisch leitende Material der zweiten Elektrodenschicht verfüllt ist. Diese Maßnahme ermöglicht eine technisch besonders einfache und kostengünstige Herstellung des mit einem elektrisch leitenden Material verfüllten dritten Grabens.

Erfindungsgemäß ist der erste Graben einer jeden Übergangszone durch Material von einer der beiden elektrochemisch aktiven Schichten verfüllt, wobei es von Vorteil sein kann, wenn der erste Graben durch Material jener aktiven Schicht verfüllt ist, die oberhalb der jeweils anderen aktiven Schicht angeordnet ist. Diese Maßnahme ermöglicht eine technisch besonders einfache und kostengünstige Herstellung des mit einem elektrisch isolierten Material verfüllten ersten Grabens, vorausgesetzt, dass das Material der aktiven Schichten eine sehr geringe bis verschwindende Elektronenleitfähigkeit besitzt, was in der Regel der Fall ist. Gleichermaßen ist es auch möglich, dass der erste Graben durch Material der Elektrolytschicht verfüllt ist.

Bei einer weiteren vorteilhaften Ausgestaltung der erfindungsgemäßen elektrochromen Verglasung unterteilt der zweite Graben einer jeden Übergangszone den Schichtenaufbau bis hin zum ersten Elektrodenabschnitt, wodurch eine besonders effektive elektrische Isolierung benachbarter elektrochromer Zellen erreicht werden kann.

Bei einer weiteren vorteilhaften Ausgestaltung der erfindungsgemäßen elektrochromen Verglasung umfasst der Schichtenaufbau eine oberhalb der zweiten Elektrodenschicht angeordnete, den Schichtenaufbau bedeckende Deckschicht aus einem elektrisch isolierenden Material, wobei der zweite Graben einer jeden Übergangszone durch das isolierende Material der Deckschicht verfüllt ist. Diese Maßnahme ermöglicht eine technisch besonders einfache und kostengünstige Verfüllung des zweiten Grabens mit einem elektrisch isolierenden Material. Alternativ oder zusätzlich kann ein weiteres (zweites) Substrat aus einem transparenten Substrat, beispielsweise Glas, vorgesehen sein. In diesem Fall ist der Schichtenaufbau zwischen einem ersten Substrat und einem zweiten Substrat angeordnet.

Da die in Serie verschalteten elektrochromen Zellen im Schaltvorgang schnell umgeladen werden müssen, können schon geringe Unterschiede der Kapazitäten starke Spannungs- und/oder Stromtransienten verursachen, wodurch die Zellen dauerhaft geschädigt werden können. Dementsprechend ist bei einer weiteren vorteilhaften Ausgestaltung der erfindungsgemäßen elektrochromen Verglasung jede elektrochrome Zelle mit einer Einrichtung zur Begrenzung der an der Zelle anliegenden Spannung versehen, welche beispielsweise in Form einer (bezogen auf die Polung einer elektrischen Leistungsquelle (z. B. Spannungsquelle) zur Kontaktierung der Elektrodenschichten) antiparallel verschalteten Diode mit vorbestimmter Durchbruchsspannung ausgebildet sein kann. Die Dioden können beispielsweise als Zener-Dioden ausgebildet sein. Durch die jeder Zelle zugeordnete spannungsbegrenzende Einrichtung wird in vorteilhafter Weise ein Überspannungsschutz für jede Zelle bereitgestellt. Bei Verwenden von antiparallel verschalteten Dioden ist lediglich die Durchbruchsspannung der Dioden an die in der Praxis auftretenden Spannungs- und/oder Stromspitzen anzupassen.

Bei einer weiteren vorteilhaften Ausgestaltung der erfindungsgemäßen elektrochromen Verglasung weist jede Übergangszone eine maximale Breite im Bereich von 100 µm bis 500 µm, bevorzugt im Bereich von 150 µm bis 250 µm, auf. Die Breite der Übergangszonen bemisst sich jeweils senkrecht zur Erstreckung der darin enthaltenen Gräben. Dabei kann es weiterhin von Vorteil sein, wenn ein sich ebenfalls senkrecht zur Erstreckung der Gräben bemessender Abstand zwischen benachbarten Gräben einer selben Übergangszone zumindest 50 µm beträgt und/oder wenn eine sich ebenfalls senkrecht zu deren Erstreckung bemessende Breite eines jeweiligen Grabens im Bereich von 30 µm bis 100 µm liegt. Durch diese Maßnahmen kann einerseits ein möglichst geringer Verlust an optisch aktiver Fläche der elektrochromen Verglasung, andererseits eine zuverlässige und sichere Serienverschaltung der elektrochromen Zellen durch Einsatz herkömmlicher Strukturierungstechniken erreicht werden. Zudem kann ein ansprechendes äußeres Erscheinungsbild der elektrochromen Verglasung durch die für den Betrachter als feine Linien erkennbaren Gräben erreicht werden. Das Substrat kann beispielsweise eine Länge und Breite aufweisen, die jeweils im Bereich von 0,5 m bis 3 m liegt.

Bei einer weiteren vorteilhaften Ausgestaltung der erfindungsgemäßen elektrochromen Verglasung kann ein ansprechendes äußeres Erscheinungsbild auch dadurch erreicht werden, dass das Substrat auf einer dem Schichtenaufbau abgewandten Seite mit einem oder mehreren opaken (undurchsichtigen) Abdeckelementen versehen ist, die jeweils einer Übergangszone zugeordnet sind und diese vollständig verdecken. Bei einer elektrochromen Verglasung mit zwei Substraten, zwischen denen sich der Schichtenaufbau befindet, können die opaken Streifen auf dem einen Substrat und/oder auf dem anderen Substrat vorgesehen sein.

Bei einer weiteren vorteilhaften Ausgestaltung der erfindungsgemäßen elektrochromen Verglasung umfasst diese eine Leistungsquelle (z. B. Spannungsquelle) zur Kontaktierung der seriell verschalteten Zellen, wobei eine elektrische Spannung der elektrischen Leistungsquelle in Abhängigkeit der Anzahl der Zellen so gewählt ist, dass bei Beaufschlagung durch die Leistungsquelle an jeder Zelle eine Spannung im Bereich von 0,5 Volt bis 3 Volt, bevorzugt im Bereich von 1,2 Volt bis 1,8 Volt, anliegt. Durch diese Maßnahme können die elektrochromen Zellen mit einer für die praktische Anwendung besonders vorteilhaften (geringen) Schaltspannung betrieben werden. Weiterhin kann es von Vorteil sein, wenn die Leistungsquelle zur Kontaktierung der beiden Elektrodenschichten eine Spannung von maximal 1000 Volt, bevorzugt maximal 120 Volt aufweist. Dabei kann die Spannung insbesondere im Bereich von 30 Volt bis 50 Volt liegen, so dass beispielsweise eine in manchen Ländern gesetzlich vorgeschriebene maximale Versorgungsspannung für Fassadenelemente nicht überschritten wird. Allgemein kann bei einer von der Leistungsquelle bereit gestellten Versorgungsspannung V_{b} und bei gegebener Schaltspannung Vs der Zellen die Anzahl n der Zellen durch die Formel n = V_{b}/Vₛ ermittelt werden.

Bei einer weiteren vorteilhaften Ausgestaltung der erfindungsgemäßen elektrochromen Verglasung ist der Schichtenaufbau durch einen oder mehrere, die ersten bis dritten Gräben querende, vierte Gräben in eine Mehrzahl elektrisch voneinander isolierte Zellenbereiche unterteilt, die jeweils eine Mehrzahl seriell verschaltetet elektrochromer Zellen enthalten, wobei die Zellenbereiche beispielsweise durch zwei gemeinsame Kontaktelemente parallel verschaltet sind. Die Zellenbereiche können monolithisch integriert oder durch Verkabelung parallel verschaltet sein. Die parallel verschalteten Zellenbereiche ermöglichen in besonders vorteilhafter Weise eine Bedeckung relativ großer Flächen durch die elektrochrome Verglasung, ohne das Erfordernis die Versorgungsspannung in entsprechender Weise zu erhöhen. Dabei ist auch denkbar, dass die Zellenbereiche als eigenständige Bauteile bzw. elektrochrome Module ausgebildet sind.

Die Erfindung erstreckt sich weiterhin auf ein Verfahren zur Herstellung einer elektrochromen Verglasung, welches die folgenden Schritte umfasst:
- Bereitstellen eines Substrats mit einem auf das Substrat aufgebrachten Schichtenaufbau, wobei der Schichtenaufbau zumindest zwei Elektrodenschichten aufweist, zwischen denen sich eine erste elektrochemisch aktive Schicht und eine zweite elektrochemisch aktive Schicht befinden, die jeweils zum reversiblen Einbau von Ionen geeignet sind, wobei die erste aktive Schicht aus einem elektrochromen Material besteht und als farbgebende Schicht dient und die zweite aktive Schicht als Ionenspeicherschicht dient und wobei die beiden aktiven Schichten durch eine Elektrolytschicht voneinander getrennt sind;
- Herstellen von ersten Gräben, durch die eine erste der beiden Elektrodenschichten in voneinander elektrisch isolierte erste Elektrodenabschnitte unterteilt wird wobei die ersten Gräben einer jeden Übergangszone durch Material von einer der beiden aktiven Schichten verfüllt werden;
- Herstellen von zweiten Graben, durch die die zweite der beiden Elektrodenschichten in elektrisch voneinander isolierte zweite Elektrodenabschnitte unterteilt wird;
- Herstellen von mit einem elektrisch leitenden Material verfüllten dritten Gräben, die jeweils zwischen einem ersten Graben und einem zweiten Graben angeordnet sind, wobei durch die dritten Gräben jeweils ein erster Elektrodenabschnitt und ein (benachbarter) zweiter Elektrodenabschnitt elektrisch miteinander verbunden sind.

Darüber hinaus erstreckt sich die Erfindung auf die Verwendung einer wie oben beschriebenen elektrochromen Verglasung als einen Raum zumindest teilweise begrenzende Vorkehrung in architektonischen Einrichtungen, beispielsweise Gebäude, Häuser und Wohnungen, und/oder in Fahrzeugen, beispielsweise Kraftfahrzeuge, und/oder in Flugzeugen, beispielsweise Verkehrs- und Frachtflugzeuge und Flugzeuge der Sportfliegerei, und/oder in Schiffen, beispielsweise Kreuzfahrtschiffe, Containerfrachter und Boote der Sportschifffahrt.

Es versteht sich, dass die verschiedenen Ausgestaltungen der Erfindung einzeln oder in beliebigen Kombinationen realisiert sein können. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung deren Umfang durch die unabhängigen Ansprüchen definiert wird zu verlassen.

### Kurze Beschreibung der Zeichnungen

Die Erfindung wird nun anhand von Ausführungsbeispielen näher erläutert, wobei Bezug auf die beigefügten Figuren genommen wird. Es zeigen:
- Fig. 1: eine schematische Schnittdarstellung eines Ausführungsbeispiels der erfindungsgemäßen elektrochromen Verglasung;
- Fig. 2: eine schematische Aufsicht der elektrochromen Verglasung von Fig. 1;
- Fig. 3: eine schematische Aufsicht eines weiteren Ausführungsbeispiels der erfindungsgemäßen elektrochromen Verglasung;
- Fig. 4: eine schematische Schnittdarstellung eines weiteren Ausführungsbeispiels der erfindungsgemäßen elektrochromen Verglasung;
- Fig. 5: eine schematische Aufsicht eines weiteren Ausführungsbeispiels der erfindungsgemäßen elektrochromen Verglasung.

### Ausführliche Beschreibung der Zeichnungen

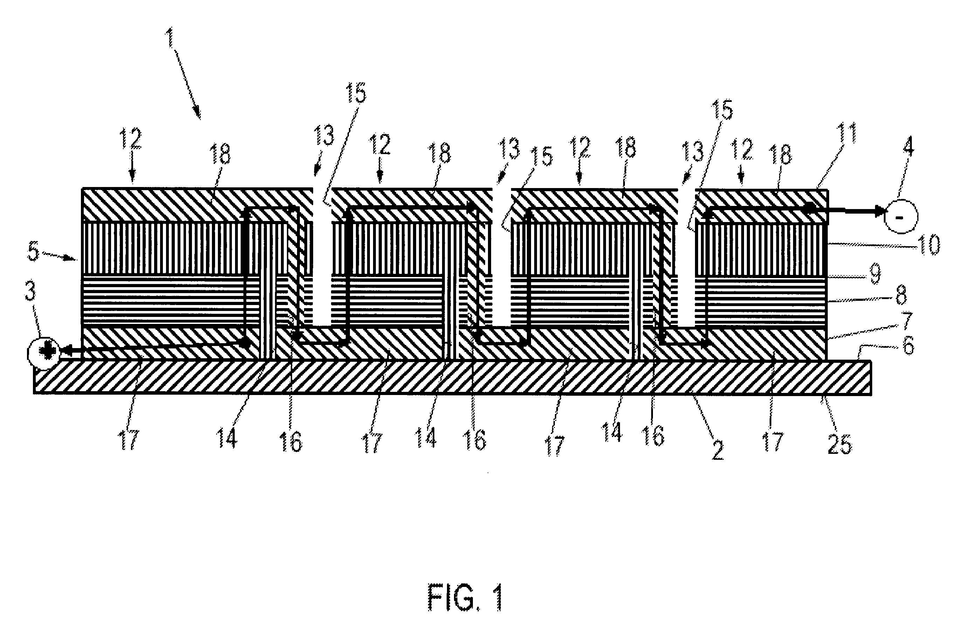

In Fig. 1 ist als Ausführungsbeispiel der Erfindung eine insgesamt mit der Bezugszahl 1 bezeichnete elektrochrome Verglasung veranschaulicht, die hier beispielsweise als Verbundschichtstruktur ausgeführt ist. Die optische Transmission der elektrochromen Verglasung 1 kann durch Beaufschlagen mit einer elektrischen Gleichspannung und/oder Gleichstrom geeigneter Größe und Polarität verändert werden. Zu diesem Zweck ist eine nicht näher dargestellte elektrische Spannungs- bzw. Leistungsquelle vorgesehen, deren Anodenanschluss 3 und Kathodenanschluss 4 in Fig. 1 schematisch angedeutet sind.

Die elektrochrome Verglasung 1 umfasst zumindest ein transparentes Substrat 2 und einen auf einer ersten Oberfläche 6 des Substrats 2 aufgebrachten Schichtenaufbau 5. Das transparente Substrat kann aus einem gläsernen oder nichtgläsernen Material, beispielsweise Natron-Kalk-Glas oder Borofloat-Glas, mit einer Stärke im Bereich von beispielsweise 0,7 bis 10 mm, insbesondere 2 mm, bestehen. Das Substrat 2 kann beispielsweise eine Länge von ca. 1000 mm und eine Breite von ca. 500 mm haben.

Der Schichtenaufbau 5 umfasst zumindest fünf funktionelle Schichten, die in der angegebenen Reihenfolge auf das Substrat 6 aufgebracht sind: eine auf die erste Oberfläche 6 des Substrats 2 aufgebrachte erste Elektrodenschicht 7, eine auf die erste Elektrodenschicht 7 aufgebrachte zweite aktive Schicht 8, eine auf die zweite aktive Schicht 8 aufgebrachte Elektrolytschicht 9, eine auf die Elektrolytschicht 9 aufgebrachte erste aktive Schicht 10 und eine auf die erste aktive Schicht 10 aufgebrachte zweite Elektrodenschicht 11. Der Schichtenaufbau 5 umfasst somit zwei Elektrodenschichten 7, 11, zwischen denen die beiden elektrochemisch aktiven Schichten 8, 10 angeordnet sind, die ihrerseits durch die Elektrolytschicht 9 voneinander getrennt sind. Obgleich dies in den Figuren nicht gezeigt ist, kann der Schichtenaufbau 5 weitere Schichten enthalten, wie beispielsweise eine Passivierungsschicht zwischen der ersten Oberfläche 6 des Substrats 2 und der ersten Elektrodenschicht 7.

Allgemein können die beiden Elektrodenschichten 7, 11 beispielsweise aus einem transparenten leitfähigen Metalloxid (TCO) bestehen, die dem Fachmann beispielsweise aus den eingangs genannten Druckschriften wohlbekannt sind. Insbesondere können die Elektrodenschichten 7, 11 beispielsweise zinndotiertes Indiumoxid (ITO), fluordotiertes Zinnoxid (SnO₂:F), Zinkoxid (ZnO) oder aluminiumdotiertes Zinkoxid (ZnO:Al) enthalten. Gleichermaßen ist es möglich, dass die Elektrodenschichten 7, 11 ein Metall oder eine Metalllegierung enthalten, wie Gold (Au), Silber (Ag), Kupfer (Cu), Platin (Pt), Aluminium (Al) oder Gemische hiervon. Denkbar ist auch, die beiden Elektrodenschichten 7, 11 aus einem leitfähigen Schichtenstapel, welcher beispielsweise aus einer Schicht aus dotiertem Metalloxid und einer Metallschicht besteht, herzustellen. Die Elektrodenschichten 7, 11 können einen Schichtstapel aus NiCr/Metall/NiCr enthalten, wobei das Metall beispielsweise Gold (Au), Silber (Ag), Kupfer (Cu), Platin (Pt), Aluminium (Al) oder Gemische davon enthält. Insbesondere können die beiden Elektrodenschichten 7, 11 aus einem Silber (Ag)-basierten, transparenten, leitfähigen Schichtenstapel hergestellt sein. Die beiden Elektrodenschichten 7, 11 können entweder aus einem selben Material oder aus voneinander verschiedenen Materialien bestehen. Die erste Elektrodenschicht 7 kann beispielsweise einen Flächenwiderstand von 8 Ohm aufweisen, während die zweite Elektrodenschicht 11 einen Flächenwiderstand von beispielsweise 80 Ohm aufweist.

Die beiden aktiven Schichten 8, 10 bestehen jeweils aus einem Material, das zum reversiblen Einlagern von Ionen geeignet ist, wobei die erste aktive Schicht 10 hier beispielsweise aus einem kathodischen elektrochromen Material besteht und als farbgebende Schicht dient, deren optische Transmission durch Ein- und Auslagern von Ionen und der gleichzeitigen Änderung von Oxidationszuständen variiert werden kann. Die zweite aktive Schicht 8 dient als Ionenspeicherschicht bzw. Gegenelektrode, welche ihre optische Transmission beim Ein- und Auslagern der Ionen nicht ändert.

Das elektrochrome Material der farbgebenden, ersten aktiven Schicht 10 kann beispielsweise ein Material oder eine Mischung von Materialien, gewählt aus der Gruppe, bestehend aus Wolframoxid, Nickeloxid, Nioboxid, Iridiumoxid, Molybdänoxid, Vanadiumoxid, Bismutoxid, Antimonoxid und Titanoxid, enthalten. Das Material oder die Mischungen aus den oben genannten Materialen können zusätzlich Titan, Tantal oder Rhenium enthalten. Die als Gegenelektrode dienende, zweite aktive Schicht 8 kann beispielsweise ein Material oder eine Mischung von Materialien, gewählt aus der Gruppe, bestehend aus Wolframoxid, Nickeloxid, Nioboxid, Iridiumoxid, Molybdänoxid, Vanadiumoxid, Bismutoxid, Antimonoxid und Titanoxid enthalten. Das Material oder Mischungen aus den oben genannten Materialen können zusätzlich Titan, Tantal oder Rhenium enthalten. Gleichermaßen kann jedes andere als Gegenelektrode geeignete Material verwendet werden. Die beiden aktiven Schichten 8, 10 können beispielsweise eine Breite von 480 mm und eine Länge von 980 mm aufweisen, entsprechend einer umlaufenden Randentschichtung des Schichtenaufbaus 5 von 10 mm.

Als ein zum Ionentransport geeignetes Material der Elektrolytschicht 9 kann beispielsweise eine Polymerschicht oder eine anorganische Schicht verwendet werden. Die Elektrolytschicht 9 enthält beispielsweise Siliziumoxid, Tantaloxid, Hafniumoxid, Siliziumnitrid, Molydänoxid, Antimonoxid, Nickeloxid, Zinnoxid, Zirkonoxid, Aluminumoxid, Nioboxid, Chromoxid, Kobaltoxid, Titanoxid, Zinkoxid, aluminumdotiertes Zinkoxid, Zinn-Zink-Oxid, Vanadiumoxid oder Gemische davon, wobei mindestens eines der Oxide hydriert oder nitriert sein kann. Dem Fachmann sind die für die verschiedenen funktionellen Schichten des Schichtenaufbaus 5 verwendbaren Materialien beispielsweise aus den eingangs genannten Druckschriften wohlbekannt. Auf die dort genannten Materialien für die funktionellen Schichten wird hier in vollem Umfang Bezug genommen, die somit zu einem Teil dieser Beschreibung werden.

In der elektrochromen Verglasung 1 ist der Schichtenaufbau 5 durch mehrere Übergangszonen 13 in eine Mehrzahl seriell verschalteter elektrochromer Zellen 12 unterteilt. Obgleich in Fig. 1 vier Zellen 12 und drei Übergangszonen 13 gezeigt sind, versteht es sich, dass die elektrochrome Verglasung 1 auch eine größere oder kleinere Anzahl Zellen 12 aufweisen kann. Bei einer Versorgungsspannung V_{b} von beispielsweise 48 Volt der mit der elektrochromen Verglasung verbundenen Leistungsquelle und einer gegebenen Schaltspannung Vₛ = 1,6 Volt der Zellen 12, beträgt die Anzahl n der Zellen 12 hier beispielsweise 30 (n = 48/1,6 = 30).

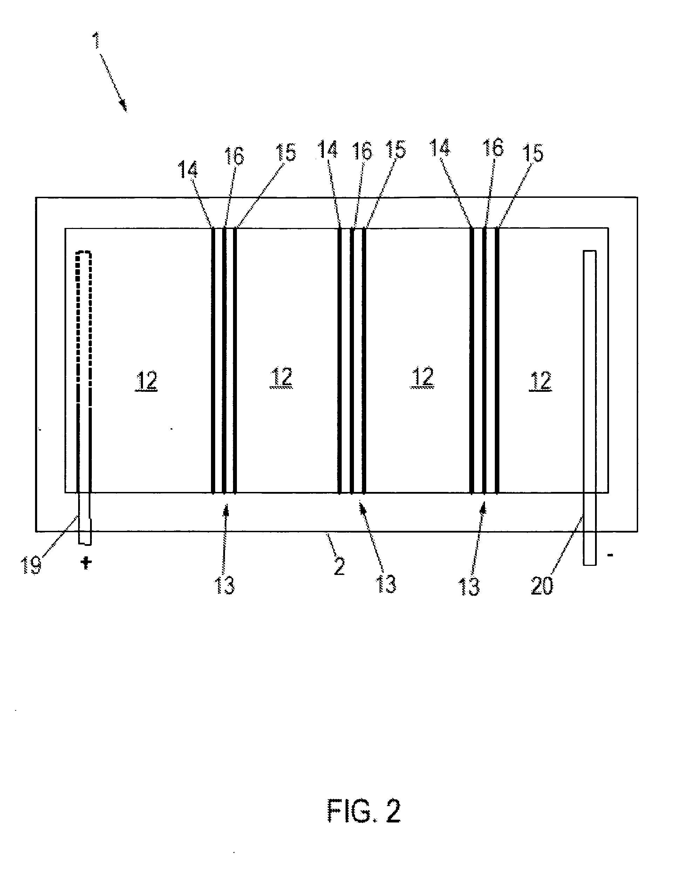

Zur Unterteilung der elektrochromen Verglasung 1 in die verschiedenen Zellen 12 ist jede Übergangszone 13 mit einem Satz von Gräben 14-16 mit zueinander parallelem Verlauf versehen. Wie Fig. 2 entnommen werden kann, haben die Gräben 14-16 hier beispielsweise einen geradlinigen Verlauf und erstrecken sich parallel zur ersten Oberfläche 6 des Substrats 2 jeweils über den vollständigen Schichtenaufbau 5. Die Gräben 14-16 sind als vertikale Gräben jeweils senkrecht zur ersten Oberfläche 6 des Substrats 2 getieft. Obgleich dies in den Figuren nicht gezeigt ist, wäre es gleichermaßen möglich, dass die Gräben 14-16 einen nicht-geradlinigen, beispielsweise mäanderförmigen, wellenförmigen, sägezahnförmigen oder anders gearteten polygonalen Verlauf haben, wodurch eine beispielsweise streifenförmige Serienverschaltung der Zellen 12 ermöglicht ist. Jede Übergangszone 13 umfasst einen ersten Graben 14, einen zweiten Graben 15 und einen dritten Graben 16, wobei die Abfolge der Gräben 14-16 in allen Übergangszonen 13 gleich ist. Im gezeigten Ausführungsbeispiel befindet sich der dritte Graben 16 zwischen dem ersten Graben 14 und dem zweiten Graben 15, wobei der erste Graben 14 stets auf der einen Seite und der zweite Graben 15 stets auf der anderen Seite des dritten Grabens 16 angeordnet ist.

In jeder Übergangszone 13 ist der erste Graben 14 in der Elektrolytschicht 9, der zweiten aktiven Schicht 8 und der ersten Elektrodenschicht 7 ausgebildet und mit Material der ersten aktiven Schicht 10 verfüllt. Durch die ersten Gräben 14 wird insbesondere die erste Elektrodenschicht 7 in eine Mehrzahl erster Elektrodenabschnitte 17 unterteilt, die voneinander elektrisch isoliert sind, wobei das kathodisch elektrochrome Material der ersten Elektrodenschicht 10 in der Regel über eine nur sehr geringe bzw. fehlende Elektronenleitfähigkeit verfügt. Andererseits erstreckt sich der zweite Graben 15 von der zweiten Elektrodenschicht 11 bis hin zur ersten Elektrodenschicht 7, so dass der zweite Graben 15 in der zweiten Elektrodenschicht 11, der ersten aktiven Schicht 10, der Elektrolytschicht 9 und der zweiten aktiven Schicht 8 ausgebildet ist. Durch die zweiten Gräben 15 wird insbesondere die zweite Elektrodenschicht 11 in eine Mehrzahl zweiter Elektrodenabschnitte 18 unterteilt, die voneinander elektrisch isoliert sind. Obgleich dies in den Figuren nicht gezeigt ist, kann die elektrochrome Verglasung 1 mit einer den Schichtenaufbau 5 überdeckenden Deckschicht aus einem Material mit sehr geringer bzw. fehlender Elektronenleitfähigkeit versehen sein, das beim Aufbringen in die zweiten Gräben 15 eindringt, so dass die zweiten Gräben 15 mit dem Material der Deckschicht verfüllt sind. Zudem erstreckt sich der dritte Graben 16 von der ersten aktiven Schicht 10 bis hin zur ersten Elektrodenschicht 7, so dass der dritte Graben 16 in der ersten aktiven Schicht 10, der Elektrolytschicht 9 und der zweiten aktiven Schicht 8 ausgebildet ist. Dabei ist der dritte Graben 16 mit Material der zweiten Elektrodenschicht 11 verfüllt. Durch den dritten Graben 16 wird eine elektrische leitende Verbindung zwischen dem zweiten Elektrodenabschnitt 18 der einen an die Übergangszone 13 angrenzenden Zelle 12 und dem ersten Elektrodenabschnitt 18 der anderen an die Übergangszone 13 angrenzenden Zelle 12 geschaffen, wodurch die Zellen 12 seriell miteinander verschaltet werden. In Fig. 1 ist beispielsweise jeder zweite Elektrodenabschnitt 18 mit dem jeweils rechts benachbarten ersten Elektrodenabschnitt 17 elektrisch verbunden. Durch die Übergangszonen 13 wird die elektrochrome Verglasung 1 hier beispielsweise in 30 Zellen 12 unterteilt, die jeweils eine Breite von 1,58 mm und eine Länge von 980 mm aufweisen und auf dem Substrat 2 zueinander parallel und streifenförmig angeordnet sind.

In der elektrochromen Verglasung 1 sind die seriell verschalteten Elektrodenabschnitte 17, 18 mit zwei beispielsweise aus einem metallischen Material bestehenden Kontaktstreifen 19, 20 elektrisch verbunden, wobei ein erster Kontaktstreifen 19 an den randständigen ersten Elektrodenabschnitt 17 und ein zweiter Kontaktstreifen 20 an den randständigen zweiten Elektrodenabschnitt 18 angeschlossen ist. Die elektrochrome Verglasung 1 verfügt in ihrer Eigenschaft als Ladungsspeicher über eine elektrische Kapazität, die über die an die beiden Kontaktstreifen 19, 20 angeschlossene Leistungsquelle auf- bzw. entladen werden kann. Dabei können die seriell verschalteten elektrochromen Zellen 12, die ihrerseits über eine ladungsspeichernde Eigenschaft verfügen, als Serienschaltung von Kapazitäten aufgefasst werden. In Fig. 1 ist dies durch eine durchgezogene Linie schematisch dargestellt. Durch Verbinden mit dem Anoden- und Kathodenanschluss 3, 4 der elektrischen Leistungsquelle kann in gewünschter Weise eine Färbung (Verminderung der optischen Transmission) oder eine Entfärbung (Erhöhung der optischen Transmission) der elektrochromen Verglasung 1 erreicht werden. In Fig. 1 ist der erste Kontaktstreifen 19 beispielsweise mit dem Anodenanschluss 3 und der zweite Kontaktstreifen 20 mit dem Kathodenanschluss 4 der elektrischen Leistungsquelle verbunden, so dass die optische Transmission der aus einem kathodisch elektrochromen Material bestehenden ersten aktiven Schicht 10 elektrisch verändert werden kann. Liegt beispielsweise eine Spannung von 48 Volt an, so ist die elektrochrome Verglasung 1 dunkel, bei einem spannungslosen Zustand ist sie hell. Hinsichtlich der ladungsspeichernden Eigenschaft führt eine Färbung der elektrochromen Verglasung 1 zu einer elektrischen Aufladung der in Serie verschalteten Kapazitäten bzw. Zellen 12, wohingegen eine Entfärbung der elektrochromen Verglasung 1 zu einer Entladung führt. Lediglich beispielhaft sei angegeben, dass die Kapazität der Verglasung 1 mit einem Kontrast von 20 ca. 300 F/m² betragen kann.

In der elektrochromen Verglasung 1 hat jede Übergangzone 13 eine sich parallel zur ersten Oberfläche 6 des Substrats 2 und senkrecht zur Erstreckung der Gräben 14-16 bemessende maximale Breite, die vorzugsweise im Bereich von 100 µm bis 500 µm, stärker bevorzugt im Bereich von 150 µm bis 250 µm liegt, wobei ein sich in gleicher Richtung bemessender Abstand zwischen benachbarten Gräben 14-16 einer selben Übergangszone 13 vorzugsweise zumindest 50 µm beträgt. Zudem liegt eine sich ebenfalls in gleicher Richtung bemessende Breite eines jeweiligen Grabens 14-16 vorzugsweise im Bereich von 30 µm bis 100 µm.

In der folgenden Tabelle 1 sind beispielhafte Werte für die Dimensionierung der Gräben 14-16 und Übergangszonen 13 der elektrochromen Verglasung 1 angegeben:

**Tabelle 1**

| | Breite Übergangszone | Breite Graben | Zwischenabstand benachbarter Gräben |
|---|---|---|---|
| Beispiel 1 | 190 µm | 30 µm | 50 µm |
| Beispiel 2 | 240 µm | 40 µm | 60 µm |
| Beispiel 3 | 310 µm | 50 µm | 80 µm |

Wie Versuche der Anmelderin gezeigt haben, konnte für das in Fig. 1 und 2 veranschaulichte Ausführungsbeispiel der elektrochromen Anordnung 1, welches entsprechend Beispiel 2 von Tabelle 1 ausgeführt wurde, durch die Unterteilung in 30 Zellen 12 eine Verminderung der Schaltzeit von 60 Sekunden auf 5 Sekunden erreicht werden.

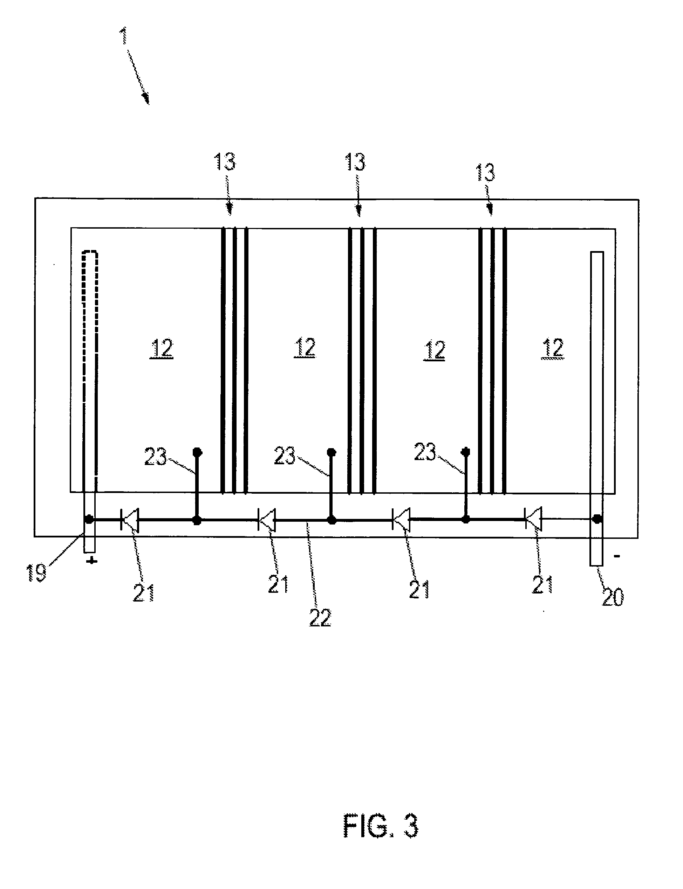

Es wird nun Bezug auf Fig. 3 genommen, worin ein weiteres Ausführungsbeispiel der erfindungsgemäßen elektrochromen Verglasung 1 gezeigt ist. Um unnötige Wiederholungen zu vermeiden, werden lediglich die Unterschiede zu dem in den Figuren 1 und 2 gezeigten Ausführungsbeispiel erläutert und ansonsten auf die dort gemachten Ausführungen Bezug genommen. Demnach umfasst die elektrochrome Verglasung 1 eine Mehrzahl Dioden 21, die beispielsweise als Zener-Dioden mit einer vorbestimmten Durchbruchsspannung ausgebildet sind. Dabei ist jede Diode 21 einer Zelle 12 zugeordnet. Wie Fig. 3 entnommen werden kann, sind die Dioden 21 über eine gemeinsame erste Leitung 22 seriell verschaltet und an die beiden Kontaktstreifen 19, 20 angeschlossen. Von der ersten Leitung 22 zweigen jeweils zweite Leitungen 23 ab, die jeweils an den ersten Elektrodenabschnitt 17 der Zellen 12 angeschlossen sind, so dass jede Zelle 12 mit einer in Sperrrichtung (d. h. antiparallel) angeordneten Diode 21 verschaltet ist. Dabei sind die Durchbruchsspannungen der Dioden 21 so gewählt, dass die Zellen 12 vor transienten Überspannungen, die insbesondere beim Schaltvorgang auftreten können, geschützt sind. Im vorliegenden Beispiel beträgt die Durchbruchsspannung der Dioden 21 beispielsweise 1,8 Volt. In Fig. 3 sind die Dioden 21 hybrid, d. h. durch elektrische Leitungen, mit den Zellen 12 verbunden. Alternativ wäre es auch möglich, dass die Dioden 21 in Entsprechung zu den Zellen 12 monolithisch integriert ausgebildet sind.

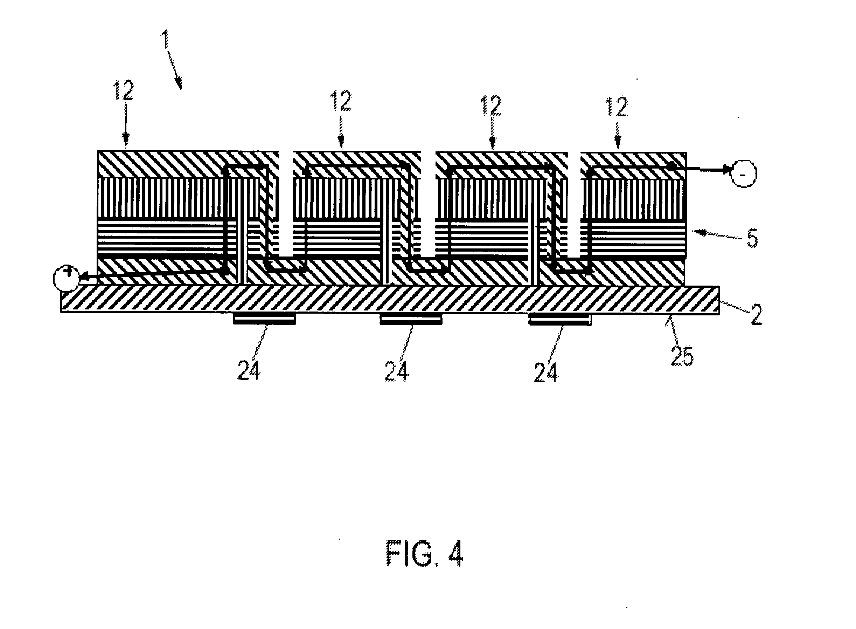

In Fig. 4 ist weiteres Ausführungsbeispiel der erfindungsgemäßen elektrochromen Verglasung 1 gezeigt, wobei wiederum lediglich die Unterschiede zu dem in den Figuren 1 und 2 gezeigten Ausführungsbeispiel erläutert und ansonsten auf die dort gemachten Ausführungen Bezug genommen wird. Demnach umfasst die elektrochrome Verglasung 1 eine Mehrzahl opaker (undurchsichtiger) Streifen 24, die auf eine der ersten Oberfläche 6 entgegen gesetzte, zweite Oberfläche 25 des Substrats 2 aufgebracht sind. Die Streifen 24 befinden sich jeweils im Bereich der Übergangszonen 13 und überdecken diese vollständig, so dass die Übergangszonen 13 für einen Betrachter auf dieser Seite nicht mehr erkennbar sind. Hierdurch kann die ästhetische Erscheinung der elektrochromen Verglasung 1 verbessert sein.

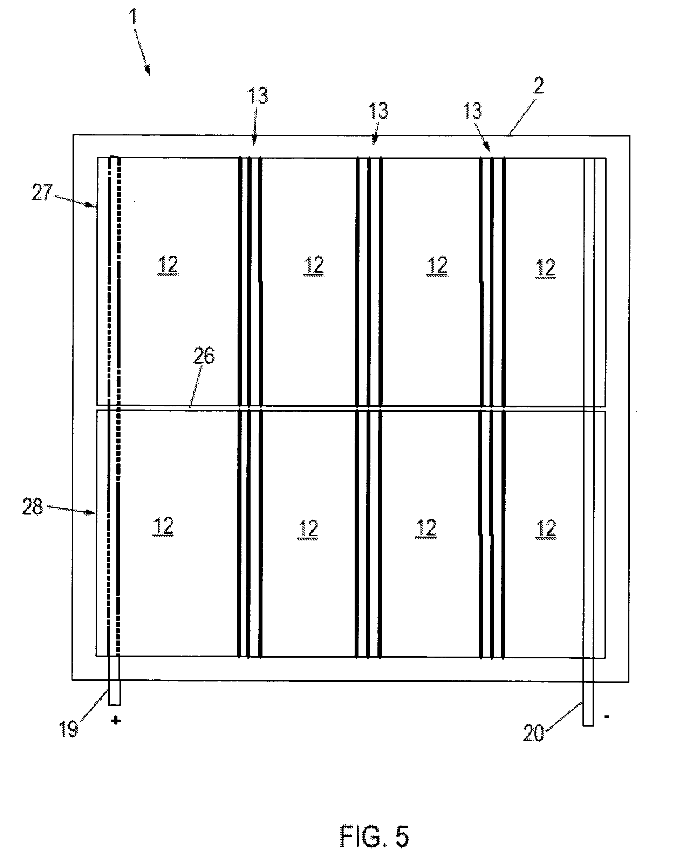

In Fig. 5 ist weiteres Ausführungsbeispiel der erfindungsgemäßen elektrochromen Verglasung 1 gezeigt, wobei lediglich die Unterschiede zu dem in den Figuren 1 und 2 gezeigten Ausführungsbeispiel erläutert und ansonsten auf die dort gemachten Ausführungen Bezug genommen wird. Demnach ist der Schichtenaufbau 5 der elektrochromen Verglasung 1 durch einen senkrecht zu den ersten bis dritten Gräben 14-16 verlaufenden vierten Graben 26 in zwei elektrisch voneinander isolierte Zellenbereiche 27, 28 unterteilt, die jeweils vier seriell verschaltete elektrochrome Zellen enthalten. Dabei sind die beiden Zellenbereiche 27, 28 durch die beiden Kontaktstreifen 19, 20 parallel verschalten. Zu diesem Zweck ist der erste Kontaktstreifen 19 an die beiden randständigen ersten Elektrodenabschnitte 17 und der zweite Kontaktstreifen 20 an die beiden randständigen zweiten Elektrodenabschnitte 18 angeschlossen. Denkbar wäre auch, die beiden Zellenbereiche 27, 28 als eigenständige (Sub-)Module auszubilden, die jeweils für sich über erste und zweite Kontaktstreifen 19, 20 verfügen, die hybrid oder monolithisch integriert parallel verschalten werden. Zudem könnte jeder Zellenbereich über ein eigenes Substrat 2 verfügen. Obgleich dies in Fig. 5 nicht gezeigt ist, können gleichermaßen mehrere vierte Gräben 26 vorgesehen sein, durch welche der Schichtenaufbau 5 in mehr als zwei Zellenbereiche 27, 28 unterteilt wird.

Die in den Figuren gezeigte elektrochrome Verglasung 1 kann beispielsweise in folgender Weise hergestellt werden:
- Aufbringen der ersten Elektrodenschicht 7 und anschließend der zweiten aktiven Schicht 8, sowie der Elektrolytschicht 9 auf das Substrat 2;
- Ausbilden der ersten Gräben 14, wodurch insbesondere die erste Elektrodenschicht 7 strukturiert wird;
- Aufbringen der ersten aktiven Schicht 10, dabei Verfüllen der ersten Gräben 14;
- Ausbilden der dritten Gräben 16, wodurch insbesondere die beiden aktiven Schichten 8, 10 strukturiert werden;
- Aufbringen der zweiten Elektrodenschicht 11, dabei Verfüllen der dritten Gräben 16;
- Ausbilden der zweiten Gräben 15, wodurch insbesondere die zweite Elektrodenschicht 11 strukturiert wird;
- Herstellen der beiden Kontaktstreifen 19, 20, wobei der erste Kontaktstreifen 19 mit dem Anodenanschluss 3 und der zweite Kontaktstreifen 20 mit dem Kathodenanschluss 4 der Leistungsquelle verbunden wird;
- optionales Aufbringen der Streifen 24 auf das Substrat 2;
- optionales Aufbringen einer Deck- bzw. Laminierschicht, dabei Verfüllen der zweiten Gräben 15;
- optionales Verbinden mit einem weiteren (transparenten) Substrat, so dass der Schichtenaufbau 5 zwischen den beiden Substraten angeordnet ist.

Bei einer alternativen Vorgehensweise wird die erste Elektrodenschicht 7 unmittelbar nach deren Aufbringen durch Ausbilden der ersten Gräben 14 strukturiert, wobei anschließend die weiteren Schichten aufgebracht und strukturiert werden. Dabei werden die ersten Gräben 14 mit dem Material der zweiten aktiven Schicht 8 verfüllt.

Die Gräben 14-16 können durch verschiedene herkömmliche Techniken ausgebildet werden, wobei zu diesem Zweck insbesondere Laserschreiben bzw. Laserabtragen, mechanisches Abtragen, Lift-Off-Techniken oder Ätztechniken, beispielsweise mittels Ätzpasten, eingesetzt werden können. Für das Laserabtragen kann es bevorzugt sein, wenn die ersten Gräben 14 durch einen Laser mit einer Wellenlänge im ultravioletten (UV) Wellenlängenbereich, die zweiten Gräben 15 bei einer Wellenlänge von 532 nm oder 1064 nm, und die dritten Gräben 16 bei einer Wellenlänge von 532 nm ausgebildet werden. Die Streifen 24 können beispielsweise mittels Abdecksiebdruck auf das Substrat 2 aufgebracht werden, wobei auch jede andere geeignete Technik eingesetzt werden kann.

Die Erfindung stellt eine elektrochrome Verglasung zur Verfügung, deren Schaltzeiten durch die Aufteilung in elektrochrome Zellen insbesondere bei großflächigen Verglasungen gegenüber herkömmlichen vergleichbaren Verglasungen verringert sind. Die monolithisch integrierte, serielle Verschaltung der Zellen kann in der industriellen Serienfertigung durch herkömmliche Techniken kostengünstig realisiert werden. Die in den optisch nicht aktiven Übergangszonen enthaltenen Gräben sind für den Betrachter als feine Linien erkennbar und können durch opake Streifen abgedeckt werden, um auf diese Weise das äußere Erscheinungsbild zu verbessern. Sie können insbesondere auch als Erkennungsmerkmal für schnell schaltende, elektrochrome Verglasungen dienen. Durch eine antiparallel verschaltete Diode kann jede elektrochrome Zelle vor transienten Spannungsspitzen geschützt werden. Die an die elektrochrome Verglasung für den Schaltvorgang angelegte Gesamtspannung kann in gewünschter Weise so gewählt werden, dass sie einen Maximalwert nicht übersteigt, beispielsweise um gesetzliche Anforderungen zu erfüllen. Dabei kann die an jeder Zelle beim Schaltvorgang anliegende Spannung durch die Anzahl der Zellen festgelegt werden. Eine parallele Verschaltung von mehreren Zellenbereichen ermöglicht die Herstellung besonders großflächiger elektrochromer Verglasungen, ohne eine unerwünschte Erhöhung der hierbei erforderlichen Schaltspannung.

Ein Aspekt der Erfindung umfasst eine elektrochrome Verglasung 1 mit zumindest einem Substrat 2 und einem auf das Substrat 2 aufgebrachten Schichtenaufbau 5, wobei der Schichtenaufbau 5 zumindest zwei Elektrodenschichten 7, 11 aufweist, zwischen denen sich eine erste elektrochemisch aktive Schicht 10 und eine zweite elektrochemisch aktive Schicht 8 befinden, die jeweils zum reversiblen Einbau von Ionen geeignet sind, wobei die erste aktive Schicht 10 aus einem elektrochromen Material besteht und als farbgebende Schicht dient und die zweite aktive Schicht 8 als Ionenspeicherschicht dient, und wobei die beiden aktiven Schichten 8, 10 durch eine Elektrolytschicht 9 voneinander getrennt sind. Der Schichtenaufbau 5 ist durch eine oder mehrere Übergangszonen 13 in seriell verschaltete elektrochrome Zellen 12 unterteilt, wobei jede Übergangszone 13 umfasst:
- einen ersten Graben 14, durch den eine erste der beiden Elektrodenschichten 7 in voneinander elektrisch isolierte erste Elektrodenabschnitte 17 unterteilt ist;
- einen zweiten Graben 15, durch den eine zweite der beiden Elektrodenschichten 11 in elektrisch voneinander isolierte zweite Elektrodenabschnitte 18 unterteilt ist;
- einen mit einem elektrisch leitenden Material verfüllten dritten Graben 16, durch den der erste Elektrodenabschnitt 17 und der zweite Elektrodenabschnitt 18 der an die Übergangszone 13 angrenzenden Zellen 12 elektrisch miteinander verbunden sind;
wobei der dritte Graben 16 zwischen dem ersten Graben 14 und dem zweiten Graben 15 angeordnet ist, und wobei der erste Graben 14 einer jeden Übergangszone 13 durch Material von einer der beiden aktiven Schichten 8, 10 oder der Elektrolytschicht 9 verfüllt ist.

Ein weiterer Aspekt der Erfindung umfasst ein Verfahren zur Herstellung einer elektrochromen Verglasung 1 mit den folgenden Schritten:
- Bereitstellen eines Substrats 2 mit einem auf das Substrat 2 aufgebrachten Schichtenaufbau 5, wobei der Schichtenaufbau 5 zumindest zwei Elektrodenschichten 7, 11 aufweist, zwischen denen sich eine erste elektrochemisch aktive Schicht 10 und eine zweite elektrochemisch aktive Schicht 8 befinden, die jeweils zum reversiblen Einbau von Ionen geeignet sind, wobei die erste aktive Schicht 10 aus einem elektrochromen Material besteht und als farbgebende Schicht dient und die zweite aktive Schicht 8 als Ionenspeicherschicht dient und wobei die beiden aktiven Schichten 8, 10 durch eine Elektrolytschicht 9 voneinander getrennt sind;
- Herstellen von ersten Gräben 14, durch die eine erste der beiden Elektrodenschichten 7 in voneinander elektrisch isolierte erste Elektrodenabschnitte 17 unterteilt wird wobei die ersten Gräben 14 einer jeden Übergangszone 13 durch Material von einer der beiden aktiven Schichten 8, 10 verfüllt und
- Herstellen von zweiten Graben 15, durch die die zweite der beiden Elektrodenschichten 11 in elektrisch voneinander isolierte zweite Elektrodenabschnitte 18 unterteilt wird;
- Herstellen von mit einem elektrisch leitenden Material verfüllten dritten Gräben 16, die jeweils zwischen einem ersten Graben 14 und einem zweiten Graben 15 angeordnet sind, wobei durch die dritten Gräben 16 jeweils ein erster Elektrodenabschnitt 17 und ein zweiter Elektrodenabschnitt 18 elektrisch miteinander verbunden sind.

### Bezugszeichenliste

1 elektrochrome Verglasung
2 Substrat
3 Anodenanschluss
4 Kathodenanschluss
5 Schichtenaufbau
6 erste Oberfläche
7 erste Elektrodenschicht
8 zweite aktive Schicht
9 Elektrolytschicht
10 erste aktive Schicht
11 zweite Elektrodenschicht
12 Zelle
13 Übergangszone
14 erster Graben
15 zweiter Graben
16 dritter Graben
17 erster Elektrodenabschnitt
18 zweiter Elektrodenabschnitt
19 erster Kontaktstreifen
20 zweiter Kontaktstreifen
21 Diode
22 erste Leitung
23 zweite Leitung
24 Streifen
25 zweite Oberfläche
26 vierter Graben
27 erster Zellenbereich
28 zweiter Zellenbereich

## Patentansprüche

1. Elektrochrome Verglasung (1) mit zumindest einem Substrat (2) und einem auf das Substrat (2) aufgebrachten Schichtenaufbau (5), wobei der Schichtenaufbau (5) zumindest zwei Elektrodenschichten (7, 11) aufweist, zwischen denen sich eine erste elektrochemisch aktive Schicht (10) und eine zweite elektrochemisch aktive Schicht (8) befinden die jeweils zum reversiblen Einbau von Ionen geeignet sind, wobei die erste aktive Schicht (10) aus einem elektrochromen Material besteht, und wobei die beiden aktiven Schichten (8, 10) durch eine Elektrolytschicht (9) voneinander getrennt sind,
wobei der Schichtenaufbau (5) durch eine oder mehrere Übergangszonen (13) in seriell verschaltete elektrochrome Zellen (12) unterteilt ist, wobei jede Übergangszone (13) umfasst:
- einen ersten Graben (14), durch den eine erste der beiden Elektrodenschichten (7) in voneinander elektrisch isolierte erste Elektrodenabschnitte (17) unterteilt ist;
- einen zweiten Graben (15), durch den eine zweite der beiden Elektrodenschichten (11) in elektrisch voneinander isolierte zweite Elektrodenabschnitte (18) unterteilt ist;
- einen mit einem elektrisch leitenden Material verfüllten dritten Graben (16), durch den ein erster Elektrodenabschnitt (17) einer ersten an die Übergangszone angrenzenden zelle (12) und ein zweiter Elektrodenabschnitt (18) der an die Übergangszone (13) angrenzenden benechbarten Zelle (12) elektrisch miteinander verbunden sind;
wobei der dritte Graben (16) zwischen dem ersten Graben (14) und dem zweiten Graben (15) angeordnet ist und **dadurch gekennzeichnet, dass** der erste Graben (14) einer jeden Übergangszone (13) durch Material von einer der beiden aktiven Schichten (8, 10) oder der Elektrolytschicht (9) verfüllt ist.

2. Elektrochrome Verglasung (1) nach Anspruch 1, **dadurch gekennzeichnet, dass** die zweite Elektrodenschicht (11) oberhalb der ersten Elektrodenschicht (7) angeordnet ist, wobei der dritte Graben (16) einer jeden Übergangszone (13) durch das elektrisch leitende Material der zweiten Elektrodenschicht (11) verfüllt ist.

3. Elektrochrome Verglasung (1) nach Anspruch 1, **dadurch gekennzeichnet, dass** der erste Graben (14) einer jeden Übergangszone (13) durch Material jener aktiven Schicht (10) verfüllt ist, die oberhalb der jeweils anderen aktiven Schicht (8) angeordnet ist.

4. Elektrochrome Verglasung (1) nach einem der Ansprüche 2 bis 3, **dadurch gekennzeichnet, dass** der zweite Graben (15) einer jeden Übergangszone (13) den Schichtenaufbau (5) bis zum ersten Elektrodenabschnitt (17) hin unterteilt.

5. Elektrochrome Verglasung (1) nach einem der Ansprüche 2 bis 4, **dadurch gekennzeichnet, dass** der Schichtenaufbau (5) eine oberhalb der zweiten Elektrodenschicht (11) angeordnete Deckschicht aus einem elektrisch isolierenden Material umfasst, wobei der zweite Graben (15) einer jeden Übergangszone (13) durch das isolierende Material der Deckschicht verfüllt ist.

6. Elektrochrome Verglasung (1) nach einem der Ansprüche 1 bis 5, **dadurch gekennzeichnet, dass** jede Zelle (12) mit einer Einrichtung zur Spannungsbegrenzung versehen ist, die insbesondere in Form einer antiparallel verschalteten Diode (21) mit vorbestimmter Durchbruchsspannung ausgebildet sein kann.

7. Elektrochrome Verglasung (1) nach einem der Ansprüche 1 bis 6, **dadurch gekennzeichnet, dass** jede Übergangszone (13) eine maximale Breite im Bereich von 150 µm bis 250 µm aufweist.

8. Elektrochrome Verglasung (1) nach Anspruch 7, **dadurch gekennzeichnet, dass** ein Abstand zwischen benachbarten Gräben (14-16) einer selben Übergangszone (13) zumindest 50 µm beträgt.

9. Elektrochrome Verglasung (1) nach einem der Ansprüche 7 **dadurch gekennzeichnet, dass** eine Breite eines jeweiligen Grabens (14-16) im Bereich von 30 µm bis 100 µm liegt.

10. Elektrochrome Verglasung (1) nach einem der Ansprüche 1 bis 9, **dadurch gekennzeichnet, dass** das Substrat (2) auf einer dem Schichtenaufbau (5) abgewandten Seite (25) mit einem oder mehreren opaken Abdeckelementen (24) versehen ist, die jeweils einer Übergangszone (13) zugeordnet sind und diese vollständig verdecken.

11. Elektrochrome Verglasung (1) nach einem der Ansprüche 1 bis 10, **dadurch gekennzeichnet, dass** der Schichtenaufbau (5) zwischen einem ersten Substrat (2) und einem zweiten Substrat angeordnet ist.

12. Elektrochrome Verglasung (1) nach einem der Ansprüche 1 bis 11, bei welcher der Schichtenaufbau (5) durch einen oder mehrere vierte Gräben (26) in eine Mehrzahl elektrisch voneinander isolierte Zellenbereiche (27, 28) unterteilt ist, die jeweils eine Mehrzahl seriell verschaltetet elektrochromer Zellen (12) enthalten, wobei die Zellenbereiche (27, 28) parallel verschaltet sind.

13. Verfahren zur Herstellung einer elektrochromen Verglasung (1) nach Anspruch 1, welches die folgenden Schritte umfasst:
- Bereitstellen eines Substrats (2) mit einem auf das Substrat (2) aufgebrachten Schichtenaufbau (5), wobei der Schichtenaufbau (5) zumindest zwei Elektrodenschichten (7, 11) aufweist, zwischen denen sich eine erste elektrochemisch aktive Schicht (10) und eine zweite elektrochemisch aktive Schicht (8) befinden, die jeweils zum reversiblen Einbau von Ionen geeignet sind, wobei die erste aktive Schicht (10) aus einem elektrochromen Material besteht, und wobei die beiden aktiven Schichten (8, 10) durch eine Elektrolytschicht (9) voneinander getrennt sind;
- Herstellen von ersten Gräben (14), durch die eine erste der beiden Elektrodenschichten (7) in voneinander elektrisch isolierte erste Elektrodenabschnitte (17) unterteilt wird, wobei die ersten Gräben (14) einer jeden Übergangszone (13) durch Material von einer der beiden aktiven Schichten (8, 10) verfüllt werden;
- Herstellen von zweiten Gräben (15), durch die die zweite der beiden Elektrodenschichten (11) in elektrisch voneinander isolierte zweite Elektrodenabschnitte (18) unterteilt wird;
- Herstellen von mit einem elektrisch leitenden Material verfüllten dritten Gräben (16), die jeweils zwischen einem ersten Graben (14) und einem zweiten Graben (15) angeordnet sind, wobei durch die dritten Gräben (16) jeweils ein erster Elektrodenabschnitt (17) und ein zweiter Elektrodenabschnitt (18) elektrisch miteinander verbunden sind.

14. Verwendung einer elektrochromen Verglasung (1) nach einem der Ansprüche 1 bis 12 als einen Raum zumindest teilweise begrenzende Vorkehrung in architektonischen Einrichtungen und/oder in Fahrzeugen und/oder in Flugzeugen und/oder in Schiffen.

## Claims

1. Electrochromic glazing (1) having at least a substrate (2) and a layer structure (5) applied to the substrate (2), wherein the layer structure (5) has a least two electrode layers (7, 11), between which a first electrochemically active layer (10) and a second electrochemically active layer (8) are located, each of which being suitable for the reversible intake of ions, wherein the first active layer (10) consists of an electrochromic material, and wherein both active layers (8, 10) are separated from each other by an electrolyte layer (9) and
wherein the layer structure (5) is divided by one or more transition zones (13) into serially connected electrochromic cells (12), wherein each transition zone (13) comprises:
- a first trench (14), by which a first of the two electrode layers (7) is divided into first electrode sections (17) which are electrically insulated from each other;
- a second trench (15), by which a second of the two electrode layers (11) is divided into second electrode sections (18) which are electrically insulated from each other;
- a third trench (16) filled with an electrically conductive material, through which a first electrode section (17) of a first cell (12) adjacent to the transition zone and a second electrode section (18) of the neighbouring cell (12) adjacent to the transition zone (13) are connected to one another electrically;
wherein the third trench (16) is arranged between the first trench (14) and the second trench (15) and **characterised in that** the first trench (14) of each transition zone (13) is filled by material from one of the two active layers (8, 10) or the electrolyte layer (9).

2. Electrochromic glazing (1) according to claim 1, **characterised in that** the second electrode layer (11) is arranged above the first electrode layer (7), wherein the third trench (16) of each transition zone (13) is filled by the electrically conductive material of the second electrode layer (11).

3. Electrochromic glazing (1) according to claim 1, **characterised in that** the first trench (14) of each transition zone (13) is filled by material of that active layer (10), which is arranged above respectively the other active layer (8).

4. Electrochromic glazing (1) according to one of the claims 2 to 3, **characterized in that** the second trench (15) of each transition zone (13) divides the layer structure (5) up to the first electrode section (17).

5. Electrochromic glazing (1) according to one of the claims 2 to 4, **characterized in that** the layer structure (5) comprises a surface layer made of an electrically insulating material arranged above the second electrode layer (11), wherein the second trench (15) of each transition zone (13) is filled by the insulating material of the surface layer.

6. Electrochromic glazing (1) according to one of the claims 1 to 5, **characterized in that** each cell (12) is provided with a device for voltage limitation, which can be configured in particular in the form of an anti-parallel connected diode (21) with predefined breakdown voltage.

7. Electrochromic glazing (1) according to one of the claims 1 to 6, **characterized in that** each transition zone (13) has a maximum width in the range of 150 µm to 250 µm.

8. Electrochromic glazing (1) according to claim 7, **characterized in that** a distance between neighbouring trenches (14-16) of a same transition zone (13) is at least 50 µm.

9. Electrochromic glazing (1) according to claim 7, **characterized in that** a width of each trench (14-16) lies in the range between 30 µm and 100 µm.

10. Electrochromic glazing (1) according to one of the claims 1 to 9, **characterised in that** the substrate (2) is provided with one or more opaque covering elements (24) on a side (25) facing away from the layer structure (5), which are respectively associated with a transition zone (13) and completely cover it.

11. Electrochromic glazing (1) according to one of the claims 1 to 10, **characterized** that the layer structure (5) is arranged between a first substrate (2) and a second substrate.

12. Electrochromic glazing (1) according to one of the claims 1 to 11, wherein the layer structure (5) is divided by one or more fourth trenches (26) into a plurality of cell regions (27, 28) that are electrically insulated from each other, which contain respectively a majority of serially connected electrochromic cells (12), where the cell ranges (27,28) are connected in parallel.

13. Method for the manufacture of an electrochromic glazing (1) according to claim 1, which comprises the following steps:
- providing a substrate (2) with a layer structure (5) applied to the substrate (2), wherein the layer structure (5) has at least two electrode layers (7, 11), between which a first electrochemically active layer (10) and a second electrochemically active layer (8) are located, each of which being suitable for the reversible intake of ions, wherein the first active layer (10) consists of an electrochromic material and wherein both active layers (8, 10) are separated from each other by an electrolyte layer (9);
- manufacturing of first trenches (14), by which a first of the two electrode layers (7) is sub-divided into first electrode sections (17) electrically insulated from each other, wherein the first trenches (14) of each transition zone (13) are filled by material from one of the two active layers (8, 10);
- manufacturing of second trenches (15), by which the second of the two electrode layers (11) is sub-divided into second electrode sections (18) electrically insulated from each other;
- manufacturing of third trenches (16) filled with a conductive material, which are arranged respectively between a first trench (14) and a second trench (15), wherein respectively a first electrode (17) section and a second electrode section (18) are electrically connected with each other by the third trenches (16).

14. Use of an electrochromic glazing (1) according to one of claims 1 to 12 as a provision at least partially limiting a space in architectural facilities and/or vehicles and/or aircraft and/or ships.

## Revendications

1. Vitrage électrochrome (1) avec au moins un substrat (2) et avec une structure en couches (5) appliquée sur le substrat (2), où la structure en couches (5) comprend au moins deux couches d'électrodes (7, 11), entre lesquelles sont situées une première couche électrochimiquement active (10) et une deuxième couche électrochimiquement active (8), qui conviennent respectivement à la réception d'ions, où la première couche active (10) est constituée d'un matériau électrochromique et où les deux couches actives (8, 10) sont séparées l'une de l'autre par une couche d'électrolyte (9),
où la structure en couches (5) est subdivisée par une ou plusieurs zones de transition (13) en cellules (12) électrochromiques connectées en série, où chaque zone de transition (13) comprend:
- une première tranchée (14), par laquelle une première parmi les deux couches d'électrodes (7) est subdivisée en premières sections d'électrode (17) électriquement isolées entre elles;
- une deuxième tranchée (15), par laquelle une deuxième parmi les deux couches d'électrodes (11) est subdivisée en deuxièmes sections d'électrode (18) électriquement isolées entre elles ;
- une troisième tranchée (16) remplie d'un matériau électriquement conducteur, par laquelle une première section d'électrode (17) d'une première cellule (12) contiguë à la zone de transition et une deuxième section d'électrode (18) de la cellule (12) voisine contiguë à la zone de transition (13) sont reliés électriquement ;
où la troisième tranchée (16) est disposée entre la première tranchée (14) et la deuxième tranchée (15) et **caractérisé en ce que** la première tranchée (14) de chaque zone de transition (13) est remplie de matière provenant de l'une des deux couches actives (8, 10) ou de la couche d'électrolyte (9).

2. Vitrage électrochrome (1) selon la revendication 1, **caractérisé en ce que** la deuxième couche d'électrodes (11) est disposée au-dessus de la première couche d'électrodes (7), où la troisième tranchée (16) de chaque zone de transition (13) est remplie par le matériau électriquement conducteur de la deuxième couche d'électrodes (11).

3. Vitrage électrochrome (1) selon la revendication 1, **caractérisé en ce que** la première tranchée (14) de chaque zone de transition (13) est remplie par le matériel de cette couche active (10), qui est placée respectivement au-dessus de l'autre couche active (8).

4. Vitrage électrochrome (1) selon l'une des revendications 2 et 3, **caractérisé en ce que** la deuxième tranchée (15) de chaque zone de transition (13) subdivise la structure en couches (5) jusqu'à la première section d'électrode (17).

5. Vitrage électrochrome (1) selon l'une des revendications 2 à 4, **caractérisé en ce que** la structure en couches (5) comprend une couche de surface faite d'un matériau électriquement isolant disposé au-dessus de la deuxième couche d'électrodes (11), où la deuxième tranchée (15) de chaque zone de transition (13) est remplie par l'isolant de la couche de surface.

6. Vitrage électrochrome (1) selon une des revendications 1 à 5, **caractérisé en ce que** chaque cellule (12) est pourvu d'un dispositif pour limiter la tension, qui peut en particulier prendre la forme d'une diode connecté en antiparallèle (21) avec tension de claquage prédéfinie.

7. Vitrage électrochrome (1) selon l'une des revendications 1 à 6, **caractérisé en ce que** chaque zone de transition (13) présente une largeur maximale de l'ordre de 150 µm à 250 µm.

8. Vitrage électrochrome (1) selon la revendication 7, **caractérisé en ce qu'**un écart entre des tranchées (14-16) adjacentes d'une même zone de transition (13) est au moins 50 µm.

9. Vitrage électrochrome (1) selon la revendication 7, **caractérisé en ce qu'**une largeur de chaque tranchée (14-16) est située dans la gamme de 30 µm jusqu'à 100 µm.

10. Vitrage électrochrome selon l'une des revendications 1 à 9, **caractérisé en ce que** le substrat (2) sur une face (25) détournée de la structure en couches (5) est fourni d'un ou plusieurs éléments de recouvrement (24) opaques, dont chacun est respectivement associé à une zone de transition (13) et recouvre celle-ci complètement.

11. Vitrage électrochrome (1) selon l'une des revendications 1 à 10, **caractérisé en ce que** la structure en couches (5) est disposée entre un premier substrat (2) et un deuxième substrat.

12. Vitrage électrochrome (1) selon l'une des revendications 1 à 11, où la structure en couches (5) est subdivisée par une ou plusieurs quatrièmes tranchées (26) dans une pluralité de zones de cellules isolées électriquement les uns des autres (27, 28), que contiennent chacune une pluralité de cellules électrochromiques (12) connectées en série, où les zones de cellule (27,28) sont commutées en parallèle.

13. Procédure pour la fabrication d'un vitrage électrochrome (1) selon la revendication 1, qui comprend les étapes suivantes:
- fourniture d'un substrat (2) avec une structure en couches (5) appliquée sur le substrat (2), où la structure en couches (5) présente au moins deux couches d'électrode (7, 11), entre lesquelles se trouvent une première couche électrochimiquement active (10) et une deuxième couche électrochimiquement actives (8), dont chacune est adaptée pour une réception réversible d'ions, où la première couche active (10) consiste en un matériau électrochrome et où les deux couches actives (8, 10) sont séparées par une couche d'électrolyte (9) ;
- fabrication des premières tranchées (14), par lesquelles une première parmi les deux couches d'électrodes (7) est subdivisée en premières sections d'électrode (17) isolées électriquement les unes des autres, où les premières tranchées (14) de chaque zone de transition (13) sont remplies par la matière de l'une des deux couches actives (8, 10);
- fabrication des deuxièmes tranchées (15), par lesquelles la deuxième des deux couches d'électrodes (11) est subdivisée en deuxièmes sections d'électrode (18) isolées électriquement ;
- fabrication des troisièmes tranchées (16) remplies de matière conductrice, qui sont respectivement disposées entre une première tranchée (14) et une deuxième tranchée (15) où respectivement une première section d'électrode (17) et une deuxième section d'électrode (18) sont raccordées électriquement par les troisièmes tranchées (16).

14. Utilisation d'un vitrage électrochrome (1) selon l'une des revendications 1 à 12, comme disposition limitant au moins partiellement un espace dans les installations architecturales et/ou des véhicules, et/ou des avions et/ou des navires.
